# EUROPEAN PATENT APPLICATION

(11) **EP 4 325 899 A1**
(43) Date of publication of application: **21.02.2024**
(21) Application number: 23191527.3
(22) Date of filing: 15.08.2023
(51) Int. Cl.: H04S 7/00, H04R 29/00

(54) **METHOD FOR GENERATING A PERSONALISED HRTF**

(30) Priority: 15.08.2022 GB 202211927
(71) Applicant: Sony Interactive Entertainment Europe Limited, London W1F 7LP (GB)
(72) Inventor: COCKRAM, Philip, London, W1F 7LP (GB); ARMSTRONG, Calum, London, W1F 7LP (GB)
(74) Representative: Gill Jennings & Every LLP

(57) **Abstract**

A system for generating a personalised Head-Related Transfer Function, HRTF, for a user, the system comprising: a sound source at a first position; a user device comprising: a left microphone arranged to be at a left ear of the user, when the user device is worn; a right microphone arranged to be at a right ear of the user, when the user device is worn; and a controller configured to: prompt the user to move to series of different second positions; control the sound source to emit a predetermined sound signal when the user is at each second position; obtain a detected sound signal from each of the left and right microphones when the user is at each second position; generate a personalised HRTF based on the predetermined sound signal and the detected sound signal for each microphone and each second position.

## Description

### TECHNICAL FIELD

The following disclosure relates to methods for generating head-related transfer functions (HRTFs). HRTFs are used for simulating, or compensating for, how sound is received by a listener in a 3D space. For example, HRTFs are used in 3D audio rendering, such as in virtual surround sound for headphones.

### BACKGROUND

HRTFs (Head Related Transfer Functions) describe the way in which a person hears sound in 3D, and can change depending on the position of the sound source. Typically, in order to calculate a received sound *y(f, t)*, a signal *x(f, t)* transmitted by the sound source is combined with (e.g. multiplied by, or convolved with) the transfer function *H(f)*.

HRTFs are individual to each person and depend on things like the size of the head and shape of the ear. In 3D audio rendering, it is beneficial to try and personalise the HRTF filters used to best match the person listening to the audio. For example, this can mean that the person will hear audio rendered through headphones in a similar way to how they hear 3D audio in real life.

However, generating an HRTF for a specific user conventionally requires collecting data about how the user perceives sound from audio sources at different 3D positions. This is typically a technical process and is not intuitive or engaging for the user.

Accordingly, it is desirable to provide an alternative way to generate an HRTF that is personalised for an individual user.

### SUMMARY

According to a first aspect, the present disclosure provides a system for generating a personalised Head-Related Transfer Function, HRTF, for a user, the system comprising: a sound source at a first position; a user device comprising: a left microphone arranged to be at a left ear of the user, when the user device is worn; a right microphone arranged to be at a right ear of the user, when the user device is worn; and a controller configured to: prompt the user to move to series of different second positions; control the sound source to emit a predetermined sound signal when the user is at each second position; obtain a detected sound signal from each of the left and right microphones when the user is at each second position; generate a personalised HRTF based on the predetermined sound signal and the detected sound signal for each microphone and each second position.

By prompting the user to move between a series of different second positions, a personalised HRTF can be generated without requiring the user to specifically move any equipment (beyond the user device that they are wearing). This may, for example, be integrated into a game or other user task, making personalised HRTF generation more straightforward and convenient for the user.

Preferably: the user device is a VR headset further comprising a display; and the controller is configured to prompt the user to move to each of the series of second positions by controlling the display to show a corresponding virtual target.

More preferably, the virtual target is displayed in a virtual 3D environment shown by the display, or the virtual target augments a real 3D environment shown through the display.

In some embodiments, the controller is configured to control the display to show a plurality of virtual targets. The controller may be further configured to control the display to show a completion indicator associated with each of the plurality of virtual targets, the completion indicator indicating an amount of sound signal detection which has been performed for the second position corresponding to the virtual target. The controller may be further configured to control the display to show a hearing factor indicator associated with each of the plurality of virtual targets, the hearing factor indicator indicating a hearing factor which can be modelled by performing sound signal detection for the position corresponding to the virtual target.

By showing a plurality of virtual targets, the system enables the user to focus on obtaining data for the personalised HRTF which is associated with specific second positions. This can, for example, enable the user to focus on positions associated with noticeably unusual 3D sound positioning, positions associated with an intended range of motion, or positions associated with specific hearing factors.

In some embodiments the virtual targets are distributed continuously in an area of the display.

The different second positions may comprise different head orientations.

The sound source may comprise a first position sensor. In this way, the first position can be detected and does not have to be predetermined.

The user device may further comprise a second position sensor, and the controller may be configured to detect when the user is in each second position using the second position sensor. In this way, the controller can verify that the user has correctly moved to each second position.

Optionally, the system comprises a VR controller comprising the sound source. This provides a convenient way to make it possible to move the sound source and/or integrate HRTF generation into another user activity.

Optionally, generating the personalised HRTF comprises calculating an interaural time delay between the left ear and the right ear for at least one of the series of second positions.

Optionally, generating the personalised HRTF comprises calculating an interaural level difference between the left ear and the right ear for at least one of the series of second positions.

Optionally, generating the personalised HRTF comprises identifying a spectral peak or notch associated with a physical feature of the user based on the detected sound signal for at least one of the microphones and at least one of the series of second positions.

Optionally, the left and right microphones are respectively arranged to be in the left ear canal and right ear canal of the user, when the user device is worn. With this configuration, the detected sound signals can already take into account effects relating to ear shape, and more closely match the sound perceived by the user.

Optionally, generating the personalised HRTF comprises: obtaining a predetermined default HRTF model; obtaining one or more hearing factors for the user based on the predetermined sound signal and the detected sound signal for each microphone and each second position; generating the personalised HRTF model for the user by modifying the default HRTF model based on the one or more obtained hearing factors. For example, the method of previous GB application 2209463.5, which is incorporated herein by reference can be combined with the techniques described herein.

Optionally, obtaining the one or more hearing factors for the user based on the predetermined sound signal and the detected sound signal for each microphone and each second position comprises: measuring a physical feature of the user; and calculating a spectral peak or notch based on the physical feature.

Optionally, obtaining the one or more hearing factors for the user based on the predetermined sound signal and the detected sound signal for each microphone and each second position comprises: measuring a physical feature of the user using an image; identifying a hearing factor of the user based on the measured physical feature; calculating the hearing factor of the user using the detected sound signal for at least one microphone and at least one position; and checking that the calculated hearing factor matches the identified hearing factor.

According to a second aspect, the present disclosure provides a method for generating a personalised Head-Related Transfer Function, HRTF, for a user, the method comprising: prompting the user to move to series of different second positions; controlling a sound source, which is located at a first position, to emit a predetermined sound signal when the user is at each second position; obtaining a detected sound signal from each of left and right microphones when the user is at each second position, wherein each microphone is at a respective ear of the user; generating a personalised HRTF based on the predetermined sound signal and the detected sound signal for each microphone and each second position.

Preferably, the method further comprises: prompting the user to move to each of the series of second positions by controlling a display of a VR headset to show a corresponding virtual target.

More preferably, the virtual target is displayed in a virtual 3D environment shown by the display, or the virtual target augments a real 3D environment shown through the display.

Optionally, the method comprises controlling the display to show a plurality of virtual targets. The method may further comprise controlling the display to show a completion indicator associated with each of the plurality of virtual targets, the completion indicator indicating an amount of sound signal detection which has been performed for the second position corresponding to the virtual target. Additionally or alternatively, the method may further comprise controlling the display to show a hearing factor indicator associated with each of the plurality of virtual targets, the hearing factor indicator indicating a hearing factor which can be modelled by performing sound signal detection for the position corresponding to the virtual target.

In some embodiments the virtual targets are distributed continuously in an area of the display.

Optionally, the different second positions comprise different head orientations.

Optionally, the method further comprises detecting the first position using a first position sensor of the sound source.

Optionally, the method further comprises detecting when the user is in each second position using a second position sensor of the VR headset.

Optionally, the sound source is part of a VR controller.

Optionally, generating the personalised HRTF comprises calculating an interaural time delay between the left ear and the right ear for at least one of the series of second positions.

Optionally, generating the personalised HRTF comprises calculating an interaural level difference between the left ear and the right ear for at least one of the series of second positions.

Optionally, generating the personalised HRTF comprises identifying a spectral peak or notch associated with a physical feature of the user based on the detected sound signal for at least one of the microphones and at least one of the series of second positions.

Optionally, for the method, the left and right microphones are respectively in the left ear canal and right ear canal of the user.

Optionally, generating the personalised HRTF comprises: obtaining a predetermined default HRTF model; obtaining one or more hearing factors for the user based on the predetermined sound signal and the detected sound signal for each microphone and each second position; generating the personalised HRTF model for the user by modifying the default HRTF model based on the one or more obtained hearing factors.

Optionally, obtaining the one or more hearing factors for the user based on the predetermined sound signal and the detected sound signal for each microphone and each second position comprises: measuring a physical feature of the user; and calculating a spectral peak or notch based on the physical feature.

Optionally, obtaining the one or more hearing factors for the user based on the predetermined sound signal and the detected sound signal for each microphone and each second position comprises: measuring a physical feature of the user using an image; identifying the physical feature of the user using the detected sound signal for at least one microphone and at least one position; and checking that the measured physical feature matches the identified physical feature.

According to a third aspect, the present disclosure provides a controller configured to perform a method according to the second aspect.

According to a fourth aspect, the present disclosure provides a computer program comprising instructions which, when executed by a computer, cause the computer to execute a method according to the second aspect.

According to a fifth aspect, the present disclosure provides a non-transitory computer-readable medium storing instructions which, when executed by a computer, cause the computer to execute a method according to the second aspect.

According to a sixth aspect, the present disclosure provides a signal comprising instructions which, when executed by a computer, cause the computer to execute a method according to the second aspect.

### BRIEF DESCRIPTION OF THE DRAWINGS

Fig. 1A schematically illustrates HRTFs in the context of a real sound source offset from a user;
Fig. 1B schematically illustrates an equivalent virtual sound source offset from a user in audio provided by headphones;
Fig. 2 illustrates head width as a hearing factor for generating an HRTF;
Fig. 3 illustrates obtaining pinna features as hearing factors for generating an HRTF;
Fig. 4 schematically illustrates a system for generating a personalised HRTF for a user;
Fig. 5 schematically illustrates a method for generating a personalised HRTF for a user;
Fig. 6 schematically illustrates a user interface of virtual targets for guiding a user.

### DETAILED DESCRIPTION

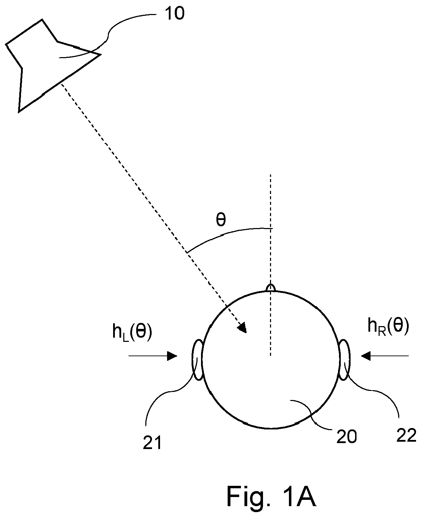

Fig. 1A schematically illustrates HRTFs in the context of a real sound source offset from a user.

As shown in Fig. 1A, the real sound source 10 is in front of and to the left of the user 20, at an azimuth angle θ in a horizontal plane relative to the user 20. The effect of positioning the sound source 10 at the angle θ can be modelled as a frequency-dependent filter h_{L}(θ) affecting the sound received by the user's left ear 21 and a frequency-dependent filter h_{R}(θ) affecting the sound received by the user's right ear 22. The combination of h_{L}(θ) and h_{R}(θ) is a head-related transfer function (HRTF) for azimuth angle θ.

More generally, the position of the sound source 10 can be defined in three dimensions (e.g. range r, azimuth angle θ and elevation angle ϕ), and the HRTF can be modelled as a function of three-dimensional position of the sound source relative to the user.

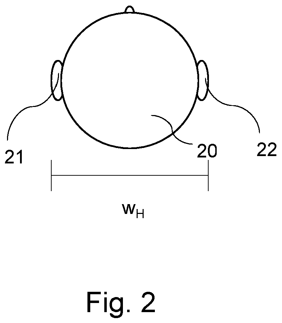

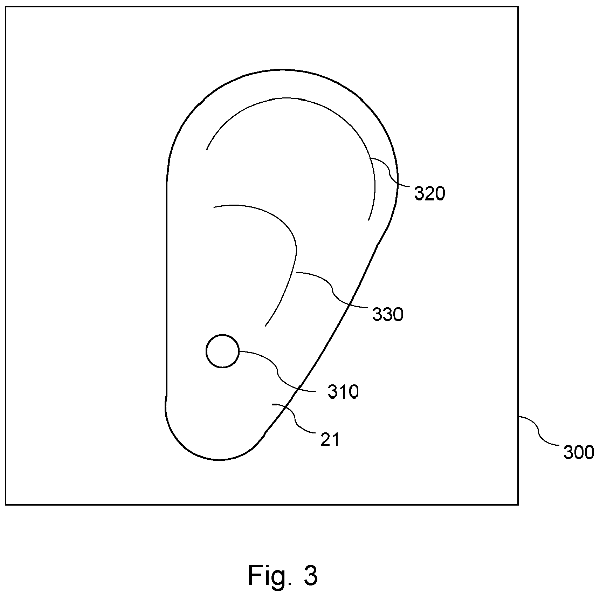

The sound received by the each of the user's ears is affected by numerous hearing factors, including the following examples:
- The distance w_{H} between the user's ears 21, 22 (which is also called the "head width" herein) causes a delay between sound arriving at one ear and the same sound arriving at the other ear (an interaural time delay). This distance w_{H} is illustrated in Fig. 2. In one example, the width of the user's head may be input by the user via a user interface such as a game controller, keyboard, touchscreen or voice command. Alternatively, the width of the user's head may be obtained from a photo. As a further alternative, the width of a user's head may be sensed based on a distance between the left and right on-ear, over-ear or in-ear speakers when worn by the user. Other head measurements can also be relevant to hearing and specifically relevant to interaural time delay, including head circumference, head depth and/or head height.
- Each of the user's ears has a different frequency-dependent sound sensitivity (i.e. the user's ears have an interaural level difference).
- The shape of the user's outer ear (pinna) creates one or more resonances or antiresonances, which appear in the HRTF as spectral peaks or notches. Fig. 3 illustrates pinna features 320, 330. In this example the pinna features are contours of the ear shape which affect how sound waves are directed to the auditory canal 310. The length and shape of the pinna feature affects which sound wavelengths are resonant or antiresonant with the pinna feature, and this response also typically depends on the position and direction of the sound source. Image processing techniques such as edge detection may be used to identify a feature of the pinna based on an image of the user's ear. A spectral peak or notch can then be calculated based on the feature. The feature may for example be a ridge contour having a measurable length, and resonances or antiresonances may be predicted based on the length of the ridge contour. Further spectral peaks or notches may be associated with other physical features of the user. For example, the user's shoulders and neck may affect how sound is reflected towards their ears. For at least some frequencies, more remote physical features of the user such as torso shape or leg shape may also be relevant.

Each of these factors may be dependent upon the position of the sound source. As a result, these factors are used in human perception of the position of a sound source.

When the sound source is distant from the user, the HRTF is generally only dependent on the direction of the sound source from the user. On the other hand, when the sound source is close to the user the HRTF may be dependent upon both the direction of the sound source and the distance between the sound source and the user.

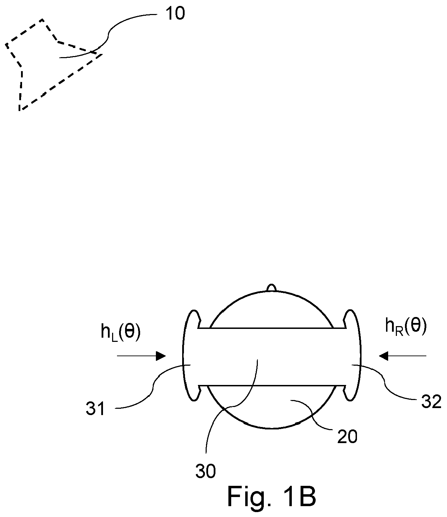

Fig. 1B schematically illustrates an equivalent virtual sound source offset from a user in audio provided by headphones 30. Herein "headphones" generally includes any device with an on-ear or in-ear sound source for at least one ear, including VR headsets and ear buds.

As shown in Fig. 1B, the virtual sound source 10 is simulated to be at the azimuth angle θ in a horizontal plane relative to the user 20. This is achieved by incorporating the HRTF for a sound source at azimuth angle θ as part of the sound signal emitted from the headphones. More specifically, the sound signal from left speaker 31 of the headphones 30 incorporates h_{L}(θ) and the sound signal from right speaker 32 of the headphones 30 incorporates h_{R}(θ). Additionally, inverse filters h⁻¹_{L0} and h⁻¹_{R0} may be applied to the emitted signals to avoid perception of the "real" HRTF of the left and right speakers 31, 32 at their positions L0 and R0 close to the ears. For example, in the case that the headphones 30 are a VR headset or the like, the inverse filters may compensate for effects arising due to the headset itself.

In general, HRTFs are complex and cannot be straightforwardly modelled as continuous function of frequency and sound source position. Instead, HRTFs are commonly stored as tables of HRTFs for a finite set of sound source positions, and interpolation may be used for source sources at other positions. An HRTF for a given sound source position may be stored as a Finite Impulse Response (FIR) filter, for example. In one case, the set of sound source positions may simply include positions spaced across a range of azimuth angles θ (without addressing effects of range or elevation). In some cases, elevation may be modelled, for example by using a correcting factor that affects left and right ears symmetrically.

The present invention seeks to provide a more convenient way of generating a personalised HRTF model suitable for simulating 3D sound sources in headphones.

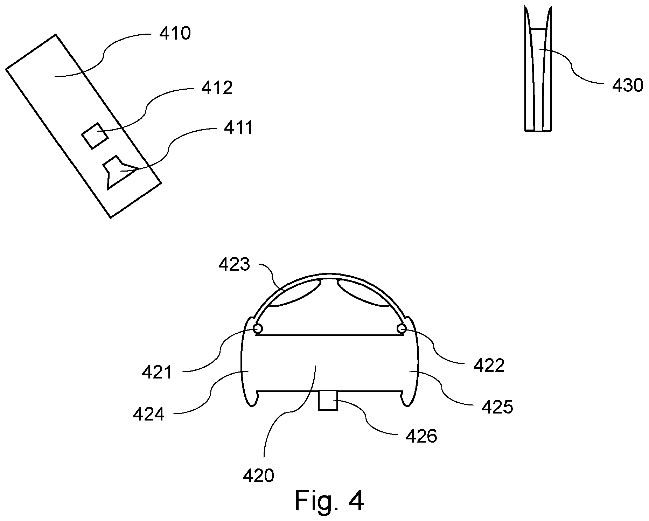

Fig. 4 schematically illustrates a system for generating a personalised HRTF for a user.

Referring to Fig. 4, the system comprises a sound source 410 arranged at a source position (first position), a user device 420, and a controller 430.

The sound source 410 may be similar to the real sound source 10 described with reference to Fig. 1A. The sound source 410 may, for example, be a standalone speaker or a speaker built into a device such as a television.

Alternatively, the sound source 410 may be a portable device such as a VR controller. The sound source 410 comprises a speaker 411.

The sound source 410 may additionally comprise a first position sensor 412. This is advantageous if the sound source 410 is portable. The position sensor may be configured to sense absolute orientation, absolute location, relative orientation and/or relative location of the sound source 410.

If the sound source 410 does not comprise a position sensor but is portable, then its position may be detected based on time-of-flight or amplitude of detected sound signals corresponding to sound signals emitted from the sound source 410. For example, when a left ear detected sound signal arrives at a same time as a right ear detected sound signal, then it may be assumed that the sound source 410 has a position that is directly ahead of a user.

Alternatively, the first position may be a predetermined fixed position. For example, the predetermined fixed position may be entered by the user through a user interface.

The user device 420 comprises a left microphone 421 and a right microphone 422. The microphones are arranged such that, when the user device is worn, the microphones are at a left and right ear of the user respectively. For example, the microphones may be built-into a main body of the user device 420 and located near to the exterior of the user's ear when the user device is worn. Alternatively, the microphones may rigidly protrude from the user device or be connected to the user device by a flexible cable, so that they can be worn over-ear or in-ear. As a further example, the microphones may be shaped similarly to, or even comprised in, ear bud headphones. When the microphones are located further into the user's ear, such as in the left and right ear canals, they may be used to more directly detect how the user perceives sound. On the other hand, when the microphones are located over-ear or on-ear, they may be used as part of more complex modelling of how the user perceives sound. General principles of HRTF measurement using ear-adjacent microphones are known in prior art.

The user device 420 in this example is a VR device further comprising a display 423. The display 423 may be a stereoscopic display including a left near-eye display and a right near-eye display. The display 423 may provide a 2D display of text or images. Additionally or alternatively, the display 423 may provide a 3D display of a virtual environment. Additionally, the display 423 may be at least partly transparent to provide an augmented reality display of the user's real environment.

The user device 420 further comprises a left speaker 424 and a right speaker 425 (which may be similar to left and right speakers 31 and 32).

The user device 420 may further comprise a second position sensor 426 for determining a second position of the user device 420. The second position sensor 426 may be configured to sense absolute orientation, absolute location, relative orientation and/or relative location of the user device 420.

The controller 430 may be part of the user device 420 or may be a separate device such as a game console, computer, or a dedicated controller device. The controller 430 is configured to perform a method using the sound source 410 and the user device 420 in order to generate the personalised HRTF for a user (as described below). The controller 430 may have any type of data connection to the sound source 410 and the user device 420 such as a wired connection, a wireless network connection (e.g. WiFi) or a direct wireless connection (e.g. Bluetooth).

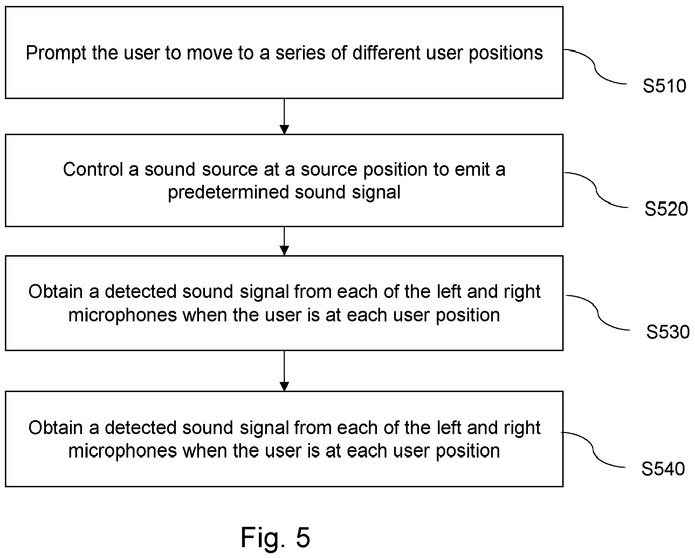

Fig. 5 schematically illustrates a method for generating a personalised HRTF for a user. This method may, for example, be performed by the controller 430 of Fig. 4.

Referring to Fig. 5, at step S510, the user is prompted to move to a series of different second positions while wearing the user device 420. The series of different second positions may be different linear positions such as different locations in a room. Alternatively, the series of different positions may be different body orientations or head orientations while remaining at an (approximately) fixed linear position. Furthermore, each second position may comprise either or both of a different linear position and a different orientation.

The user may be prompted in a variety of ways. For example, the speakers 424, 425 may output a predetermined sound signal with a modelled 3D virtual source in order prompt the user to turn towards the virtual source. This may be used to verify or detect problems with a 3D virtual source model, by comparing the user position (second position) to an expected second position. As another alternative, the speakers 424, 425 may output verbal instructions for the user to move in a linear or rotational fashion.

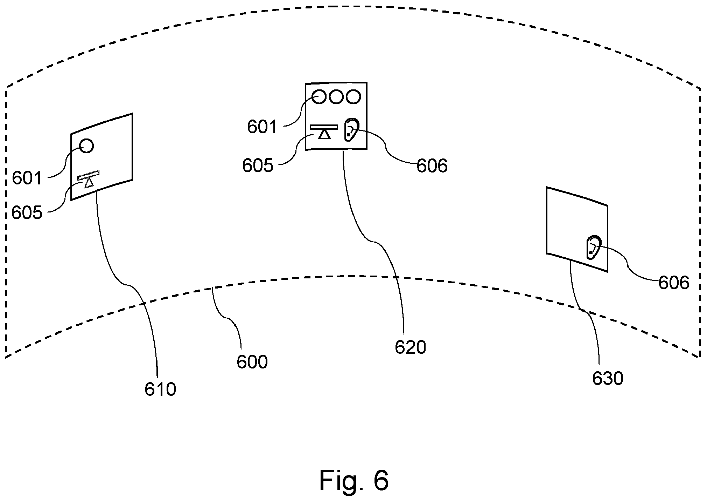

Preferably, the user is prompted to move to each of the series of second positions based on a corresponding virtual target shown by the display 423. This is discussed in more detail below with respect to Fig. 6.

At step S520, the sound source 410 is controlled to emit a predetermined sound signal and at step S530, a corresponding detected sound signal is obtained from each of the left and right microphones 421, 422.

Steps S520 and S530 are performed for each second position, when the user has responded to the prompt and moved to the second position. Times to perform steps S520 and S530 may be detected using the second position sensor 426.

The predetermined sound signal may take any form which enables recognition of a corresponding detected sound signal at the microphones 421, 422. For example, when measuring interaural time delay, the predetermined sound signal may comprise discrete time pulses such that the time of a beginning or end of the predetermined sound signal when emitted can be compared to the time of a beginning or end of the predetermined sound signal when detected at the microphones 421, 422.

The predetermined sound signal may not be fixed and may depend upon the second position. For example, a second position which is particularly useful for determining a particular hearing factor of the user may be associated with a particular predetermined sound signal. For example, the frequency range of a predetermined sound signal may depend upon a hearing factor that is to be measured.

In one case, when shape information about a user's ear and corresponding hearing response (such as a first pinna notch) is to be measured, the predetermined sound signal may be primarily in the 4 kHz to 12 kHz range. This may be associated with second positions wherein the first position is in a lower hemisphere of orientations relative to the VR headset (i.e. the sound source is below the user's eye level),

In another case, when an interaural level difference is to be measured, the predetermined sound signal may be primarily in the 10 kHz to 20kHz range. In another case, when an interaural time delay is to be measured, the predetermined sound signal may comprise pulses with an identifiable start and an identifiable end. Interaural level difference and interaural time delay may be usefully measured in a range of second positions wherein the sound source is at a lateral orientation relative to the user.

The predetermined sound signal may be emitted in response to the user moving to each of the different second positions in response to step S510. Alternatively, the predetermined sound signal may be emitted continuously while step S510 is occurring. For example, the predetermined sound signal could be a song, samples of which can be detected when received at the microphones 421, 422. The predetermined sound signal may itself be used as the prompt in step S510 in conjunction with the above described 3D virtual source model.

At step S540, a personalised HRTF is generated based on the predetermined sound signal and the corresponding detected sound signal for each microphone and each second position.

In a simple case, when the emitted predetermined sound signal has a predetermined amplitude and a known range of frequencies, then a frequency spectrum and relative amplitudes of the detected sound signal at each microphone 421, 422 may be directly used as a head related transfer function for simulating 3D sound coming from the first position of the sound source relative to the second position of the user.

Alternatively, the detected sound signals may be used to calculate one or more hearing factors such as interaural time delay, interaural level difference between the left microphone and the right microphone for at least one of the series of second positions, or physical features of one of the user's ears or their body (e.g. reflections due to shoulders or neck length), as discussed above with reference to Figs. 1 to 3. Hearing factors calculated using the detected sound signals may further be verified by using an image to measure a physical feature of the user, identifying a corresponding hearing factor based on the measured physical feature, and checking that the identified hearing factor matches the calculated hearing factor. For example, a tolerance threshold may be set for the maximum difference between a hearing factor determined based on imaging and a hearing factor determined based on the detected sound signals. Additionally, the user's perception of sound may be affected by any headset that they are wearing, for example by changing a path length difference for sound travelling to one ear and sound travelling to the other ear. As such, performing the above-described method while the user is wearing the same headset which they will then wear while listening to 3D virtual sounds can enable physical features of the headset to be incorporated in the personalised HRTF, and thereby assist in matching the user's experience of virtual sounds to their experience of real sounds in the environment around them.

Once one or more hearing factors have been calculated, these may be used to construct the personalised HRTF. For example, the hearing factors may be numerical parameters applied to an HRTF model.

Additionally, generating the personalised HRTF may comprise obtaining a predetermined default HRTF model, and modifying the default HRTF model based on the one or more obtained hearing factors. With this strategy, a default HRTF model may be based on large quantities of data obtained for people on average, and the model may be personalised with relatively little information from the specific user. This personalisation of a default model was previously described in GB application 2209463.5 which is incorporated by reference.

Furthermore, in addition to using the microphones 421, 422 to detect sound signals, hearing factors of the user may be obtained by other means and used to assist with generating the personalised HRTF model. For example, a physical feature of the user, such as a pinna of the user's ear, may be measured in a photograph, and a corresponding first pinna notch of the HRTF may be calculated based on the pinna measurement. This is also described in GB application 2209463.5.

Steps S510, S520, S530 and S540 may be performed in parallel with each other. These steps may be implemented in a combined process, or in several parallel processes.

Fig. 6 schematically illustrates an example display of virtual targets for guiding a user. This display may be presented on the display 423 of the user device 420.

The display 600 is illustrated as a curved plane representing a view around the user in a real or virtual 3D environment. In general a virtual 3D display may be described in terms of multiple such planes at different virtual distances from the user. Any alternative way of providing a 2D or 3D display may be used, so long as the display can be updated in accordance with the user's current position (second position).

The display 600 may be interactive (i.e. a user interface), although this is not necessary beyond the display responding to the user's changes of position.

The display 600 includes a plurality of virtual targets 610, 620, 630. As the user moves linearly or rotates their view, the virtual targets 610, 620 move accordingly in the display. In other words, motion tracking is used to keep the positions of the virtual targets fixed as the user moves. In a preferred example, the virtual targets 610, 620 may be linked to objects in a virtual or real 3D environment. For example, image analysis may be used to identify real objects which are visible to the user by looking through the display of the VR headset providing an augmented reality display. Alternatively, where the display is purely virtual, the virtual targets may be shown on elements of a virtual 3D environment (such as a game level) that is shown in the display.

When the user has moved to one of the series of second positions, a corresponding virtual target may indicate that the user is in position. For example, the corresponding virtual target may be aligned directly ahead of the user and may indicate that the user is in position, for example by changing colour when a distance between the user and the second position falls below a target threshold. Other common range-indicating techniques such as increasing blinking frequency may equally be used as the user approaches a prompted second position.

In this example, the display 600 includes, for each virtual target 610, 620, 630, a completion indicator 601 indicating whether step S530 has been performed for that virtual target. This may be a binary indication. Alternatively, as shown with respect to virtual targets 610 and 620, the completion indicator may indicate an amount of signal detection which has been performed (e.g. a count of how many samples have been detected by repeating steps S520 and S530), or a proportion of a desired number of samples which have been detected). On the other hand, the completion indicator 601 for virtual target 630 is blank because the user has not yet moved to that position. In this example, the completion indicator comprises a number of icons (circles). In other examples, the completion indicator may comprise a colour or colour opacity associated with the virtual target 610, 620, 630 which changes with performance of step S530.

Some virtual targets may be more relevant to some hearing factors and less relevant to other hearing factors. In order to indicate this to the user, each virtual target 610, 620, 630 may comprise one or more hearing factor indicators. In the example shown in Fig. 6, the virtual targets 610 and 620 comprise a first hearing factor indicator 605 which is an icon indicating balance, i.e. indicating that the virtual target is relevant for determining interaural level difference. Additionally, the virtual targets 620 and 630 comprise a second hearing factor indicator 606 which is an icon indicating pinna shape (as previously discussed with reference to Fig. 3). These indicators may again be shown by means other than icons. For example, a colour of the virtual target may indicate the hearing factors to which it is relevant 605, 606, and the opacity of the virtual target may indicate completion 601.

In the example of Fig. 6, the virtual targets 610, 620 and 630 are a small number of discrete targets. In an alternative implementation, the virtual targets may extend across the whole of a real or virtual 3D environment, or the whole of a region of the real or virtual 3D environment. The virtual targets may be arranged in a grid, or may be continuous. In such an example, the completion indicator may act as a record of which second positions (linear positions and/or orientations) the user has occupied. For example, where the completion indicator comprises a colour, the user may effectively paint the display by changing their position. This record of the second positions at which step S530 has been performed may assist a user in intuitively covering a 2D or 3D space to obtain data to generate a more complete personalised HRTF.

## Claims

1. A system for generating a personalised Head-Related Transfer Function, HRTF, for a user, the system comprising:
a sound source at a first position;
a user device comprising:
a left microphone arranged to be at a left ear of the user, when the user device is worn;
a right microphone arranged to be at a right ear of the user, when the user device is worn; and
a controller configured to:
prompt the user to move to series of different second positions;
control the sound source to emit a predetermined sound signal when the user is at each second position;
obtain a detected sound signal from each of the left and right microphones when the user is at each second position;
generate a personalised HRTF based on the predetermined sound signal and the detected sound signal for each microphone and each second position.

2. A system according to claim 1, wherein:
the user device is a VR headset further comprising a display; and
the controller is configured to prompt the user to move to each of the series of second positions by controlling the display to show a corresponding virtual target.

3. A system according to claim 2, wherein the virtual target is displayed in a virtual 3D environment shown by the display, or the virtual target augments a real 3D environment shown through the display.

4. A system according to claim 2 or claim 3, wherein the controller is configured to control the display to show a plurality of virtual targets.

5. A system according to claim 4, wherein controller is further configured to control the display to show a completion indicator associated with each of the plurality of virtual targets, the completion indicator indicating an amount of sound signal detection which has been performed for the second position corresponding to the virtual target.

6. A system according to claim 4 or claim 5, wherein the controller is further configured to control the display to show a hearing factor indicator associated with each of the plurality of virtual targets, the hearing factor indicator indicating a hearing factor which can be modelled by performing sound signal detection for the position corresponding to the virtual target.

7. A system according to any preceding claim, wherein the different second positions comprise different head orientations.

8. A system according to any preceding claim, wherein the sound source comprises a first position sensor.

9. A system according to any preceding claim, wherein the user device further comprises a second position sensor, and the controller is configured to detect when the user is in each second position using the second position sensor.

10. A system according to any preceding claim, further comprising a user device comprising the sound source.

11. A system according to any preceding claim, wherein generating the personalised HRTF comprises:
calculating an interaural time delay between the left ear and the right ear for at least one of the series of second positions, or
calculating an interaural level difference between the left ear and the right ear for at least one of the series of second positions, or
identifying a spectral peak or notch associated with a physical feature of the user based on the detected sound signal for at least one of the microphones and at least one of the series of second positions.

12. A system according to any preceding claim, wherein the left and right microphones are respectively arranged to be in the left ear canal and right ear canal of the user, when the user device is worn.

13. A system according to any of claims 1 to 12, wherein generating the personalised HRTF comprises:
obtaining a predetermined default HRTF model;
obtaining one or more hearing factors for the user based on the predetermined sound signal and the detected sound signal for each microphone and each second position;
generating the personalised HRTF model for the user by modifying the default HRTF model based on the one or more obtained hearing factors.

14. A method for generating a personalised Head-Related Transfer Function, HRTF, for a user, the method comprising:
prompting the user to move to series of different second positions;
controlling a sound source, which is located at a first position, to emit a predetermined sound signal when the user is at each second position;
obtaining a detected sound signal from each of left and right microphones when the user is at each second position, wherein each microphone is at a respective ear of the user;
generating a personalised HRTF based on the predetermined sound signal and the detected sound signal for each microphone and each second position.

15. A method according to claim 14, wherein the sound source is part of a VR controller.
